# EUROPÄISCHE PATENTANMELDUNG

(11) **EP 0 663 359 A1**
(43) Veröffentlichungstag der Anmeldung: **19.07.1995**
(21) Anmeldenummer: 93119733.9
(22) Anmeldetag: 08.12.1993
(51) Int. Cl.: B65G 67/60, B65G 41/00

(54) **Fahrzeug mit Vorrichtung zur Förderung von staubförmigen Schüttgütern, insbesondere Zement**

(71) Anmelder: IBAU HAMBURG INGENIEURGESELLSCHAFT INDUSTRIEBAU MBH, D-20459 Hamburg (DE)
(72) Erfinder: Appenzeller, Gerhard, D-21217 Seevetal-Over (DE); Sönnichsen, Karl-Peter, D-25920 Risum-Lindholm (DE)
(74) Vertreter: von Raffay, Vincenz, Dipl.-Ing.

(57) **Zusammenfassung**

Das Fahrzeug mit einer Vorrichtung zur Förderung von staubförmigen Schüttgütern, insbesondere Zement, zum Umschlagen von Schiffen oder dergleichen, ist mit einer als Gelenkarm ausgebildeten Förderleitung ausgerüstet, die zu einer Schneckenpumpe (6) führt, die eine Druckförderleitung (9) zu dem Silo bedient. Die Förderleitung besteht aus drei mechanischen Schneckenförderern, von denen der erste, aus dem Laderaum (11) herausführende, ein Schneckenförderer (1), der zweite, daran anschliessende, ein mit dem ersten über ein Fördergelenk verbundener Waagerechtförderer (2) und der dritte, an den zweiten über einen Drehkranz (3) anschliessende, ein in Förderrichtung schräg ansteigender Förderer (5) ist, der das Fördergut in einen Aufsatzbehälter (12) der Schneckenpumpe (6) abgibt. Durch diese Ausbildung als mechanischer Schneckenförderer entfällt zur Sicherstellung einer kontinuierlichen Förderung ein im Betriebszustand voluminöser Schleusenbehälter. Der dritte, schräg ansteigende Förderer, führt zu einer intensiven Entlüftung des Fördergutes, wodurch der Füllungs- und Wirkungsgrad der Schneckenpumpe erhöht wird. Die Schneckenpumpe läuft ruhig, Luftrückschläge und Pulsationen in der Druckförderleitung werden minimiert. Grössere Förderentfernungen lassen sich mit geringem Verschleiss überwinden.

## Beschreibung

Die Erfindung betrifft ein Fahrzeug nach dem Oberbegriff des Patentanspruches 1.

Aus der älteren, europäischen Patentanmeldung 92 109 963 (Veröffentlichungs-Nr. 0 574 596) ist ein Fahrzeug der eingangs genannten Art bekannt.

Bei diesem Fahrzeug erfolgt die Förderung aus dem Laderaum des Schiffes über eine als Gelenkarm ausgebildete Saugleitung in einen Schleusenbehälter. Aus dem Schleusenbehälter heraus führt eine Druckleitung zu dem Silo. Die gesamte Förderung ist also pneumatisch. Der Schleusenbehälter muss bei derartigen Vorrichtungen verhältnismässig gross ausgebildet sein, damit er seine Funktion als solcher erfüllen kann. In der genannten europ. Patentanmeldung wird vorgeschlagen, diesen Schleusenbehälter teleskopartig auszubilden, damit er zum Transport verkleinert werden kann. Im Unterschied zu dem Fahrzeug der genannten europ. Patentanmeldung vorbekannten Vorrichtungen, arbeitet das Fahrzeug nach der europ. Patentanmeldung bereits kontinuierlich, so daß Nachteile durch eine permanente Umsteuerung entfallen. Der Schleusenbehälter beansprucht aber einen verhältnismässig grossen Raum und er muss am Einsatzort jeweils aus- und nach dem Entladevorgang wieder eingefahren werden.

Der Erfindung liegt daher die Aufgabe zugrunde, ein Fahrzeug der eingangs genannten Art zu schaffen, das besonders einfach an unterschiedlichen Einsatzorten (mobiler Einsatz) benutzt werden kann, und bei entsprechend geringem baulichen Aufwand dennoch eine kontinuierliche Arbeitsweise erlaubt.

Diese Aufgabe wird durch das Kennzeichen des Anspruches 1 gelöst.

Bei der Erfindung erfolgt die gesamte Förderung bis zu der Schneckenpumpe, die sich an eine pneumatische Druckförderung anschliesst, mechanisch, d.h. mit Hilfe von Schneckenförderern. Hierdurch entfällt der Einsatz eines grossen Schleusenbehälters.

Dadurch, daß im Anschluss an den ersten Senkrechtförderer noch einmal eine Aufteilung in zwei Förderer erfolgt, die durch einen Drehkranz miteinander verbunden sind, kann der dritte Förderer als in Förderrichtung schräg nach oben ansteigender Förderer ausgebildet sein. Hierdurch wird eine intensive Schüttgutentlüftung ermöglicht, was wiederum den Füllungs- und Wirkungsgrad der Schneckenpumpe erhöht. Die Laufruhe der Pumpe wird verbessert, Luftrückschläge und Pulsationen in dem Fördergut werden minimiert. Grössere Förderentfernungen mit geringer Verschleissbelastung werden ermöglicht. Der erste Förderer, der von den beiden anderen Förderern unabhängig angetrieben werden kann, und der als Senkrechtförderer ausgebildet ist, kann mit höherer Drehzahl arbeiten, und dadurch das Auflockern des Fördergutes unterstützen.

Die mobile Vorrichtung, die insbesondere als Strassenfahrzeug ausgebildet ist, arbeitet staubfrei mit relativ geringem Energieaufwand und stellt insgesamt eine wirtschaftliche Investition dar.

In vorteilhafter Weise kann das Fahrzeug so ausgebildet sein, wie in Anspruch 2 angegeben.

Im folgenden wird die Erfindung unter Hinweis auf die Zeichnung anhand eines Ausführungsbeispieles näher erläutert.

Es zeigt:

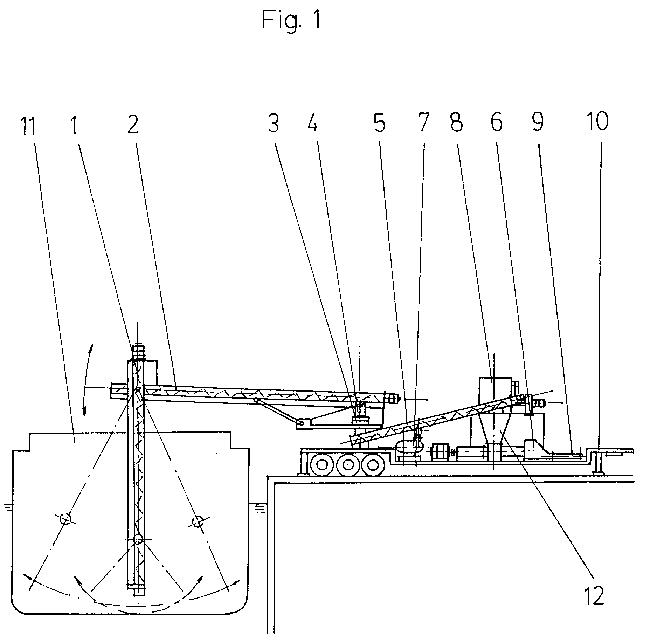

- Fig. 1: eine schematische Seitenansicht eines Fahrzeuges nach der Erfindung in Arbeitsstellung beim Entladen eines Schiffes; und
- Fig. 2: eine schematische Seitenansicht eines Strassenfahrzeuges nach der Erfindung in Fahrstellung.

Das in der Zeichnung dargestellte Fahrzeug trägt die eigentliche Fördervorrichtung, deren Förderleitung als Gelenkarm ausgebildet ist und drei unterschiedliche mechanische Förderabschnitte aufweist.

Der erste Abschnitt ist ein Senkrechtförderer 1 mit einer Förderschnecke, die einen eigenen Antrieb aufweist und mit verhältnismässig hoher Drehzahl betrieben werden kann. Diese Förderschnecke 1 taucht in den Schiffsraum 11 ein.

In Förderrichtung schliesst sich über eine Gelenkverbindung ein Waagerechtförderer 2 ebenfalls mit einer Förderschnecke mit eigenem Antrieb an.

Dieser Waagerechtförderer übergibt das Fördergut über einen Drehkranz 3 mit einer entsprechenden balgförmigen Gelenkverbindung 4 an den dritten Förderabschnitt, der durch einen schräg nach oben ansteigenden Schneckenförderer 5 gebildet wird. Auch dieser hat einen eigenen Antrieb.

Der Schneckenförderer 5 gibt das Fördergut in den Aufsatzkasten 12 der Schneckenpumpe 6 ab, wobei, bedingt durch die schräg ansteigende Förderung, eine intensive Fördergutentlüftung stattfindet. Auf dem Aufsatzkasten 12 befindet sich ein Abluftfilter 8.

Die Schneckenpumpe 6 gibt das Fördergut in eine Druckleitung 9 ab, die zu einem nichtgezeigten Silo führt. Die Druckluft wird durch einen Verdichter 7 erzeugt. Das Fahrzeug, auf dem die Vorrichtung montiert ist, ist mit 10 bezeichnet.

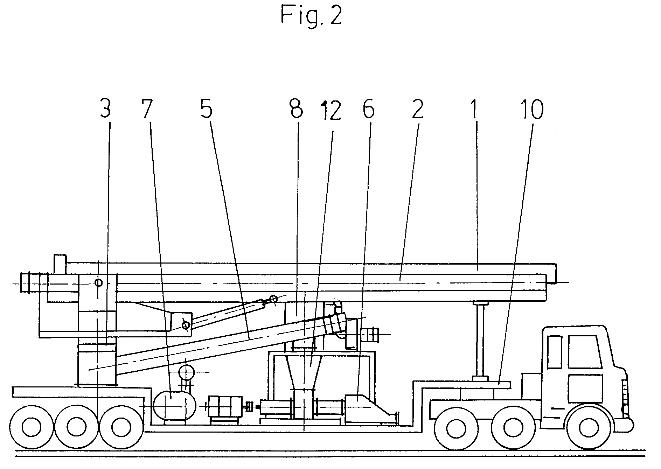

In Fig. 2 ist das Fahrzeug 10 im fahrbereiten Zustand dargestellt, d.h. die Förderleitung ist mit Hilfe Ihrer Gelenke und entsprechender hydraulischer Einrichtungen so geschwenkt, daß sie - wie dargestellt - auf dem Fahrzeug liegt und so unter Berücksichtigung der Verkehrsgesetze auf der Strasse fahren kann.

## Patentansprüche

1. Fahrzeug mit Vorrichtung zur Förderung von staubförmigen Schüttgütern, insbesondere Zement, zum Umschlagen von Schiffen oder dergleichen in Silos mit einer als Gelenkarm ausgebildeten Förderleitung, mit einer Schneckenpumpe, aus der eine Druckförderleitung zu dem Silo führt, dadurch gekennzeichnet, daß
die Förderleitung aus drei mechanischen Schneckenförderern besteht, von denen der erste, aus dem Laderaum herausführende, ein Schneckenförderer (1), der zweite, daran anschliessende, ein mit dem ersten über ein Fördergelenk verbundener Waagerechtförderer (2) und der dritte, an den zweiten über einen Drehkranz (3) anschliessende, ein in Förderrichtung schräg ansteigender Förderer (5) ist, der das Fördergut in einen Aufsatzbehälter (12) der Schneckenpumpe (6) abgibt.

2. Fahrzeug nach Anspruch 1, dadurch gekennzeichnet, daß der Aufsatzbehälter (12) der Schneckenpumpe (6) mit einem Abluftfilter (8) ausgerüstet ist.
